# FASCICULE DE BREVET EUROPEEN

(11) **EP 4 129 726 B1**
(45) Date de publication et mention de la délivrance du brevet: **29.05.2024**
(21) Numéro de dépôt: 22182039.2
(22) Date de dépôt: 29.06.2022
(51) Int. Cl.: B60K 1/04

(54) **VÉHICULE DOTÉ D'UN SYSTÈME DE FIXATION D'UNE BATTERIE ÉLECTRIQUE SOUS UN PLANCHER**
FAHRZEUG MIT EINEM SYSTEM ZUR BEFESTIGUNG EINER ELEKTRISCHEN BATTERIE UNTER EINEM BODEN
VEHICLE PROVIDED WITH A SYSTEM FOR ATTACHING AN ELECTRIC BATTERY BENEATH A FLOOR

(30) Priorité: 23.07.2021 FR 2107988
(43) Date de publication de la demande: 08.02.2023
(73) Titulaire: Renault s.a.s, 92100 Boulogne Billancourt (FR)
(72) Inventeur: FOUBERT, vincent, 78280 guyancourt (FR); OLIVIER, Louis, 78280 guyancourt (FR)

(56) Documents cités:
- WO-A1-2012/010769
- WO-A1-2013/084935
- US-A1- 2020 114 747
- US-B2- 11 485 416

## Description

La présente invention concerne un véhicule doté d'un système de fixation d'une batterie électrique sous un plancher.

De façon à clarifier la situation, la batterie électrique est fixée sous ce plancher en étant extérieure à une caisse dudit véhicule. Autrement dit, la batterie électrique est fixée sous le véhicule de manière à se retrouver directement en vis-à-vis de la route le long de laquelle évolue ledit véhicule.

US 2020/114747 A1 divulgue un véhicule comprenant une batterie électrique haute tension.

Afin de bien comprendre le positionnement des différentes pièces impliquées dans un véhicule selon l'invention, la description est réalisée en faisant référence à un repère orthonormé direct XYZ dans lequel X est un axe longitudinal avant-arrière du véhicule orienté vers l'arrière, Y est un axe transversal orienté vers la droite du véhicule et Z est un axe vertical dirigé vers le haut.

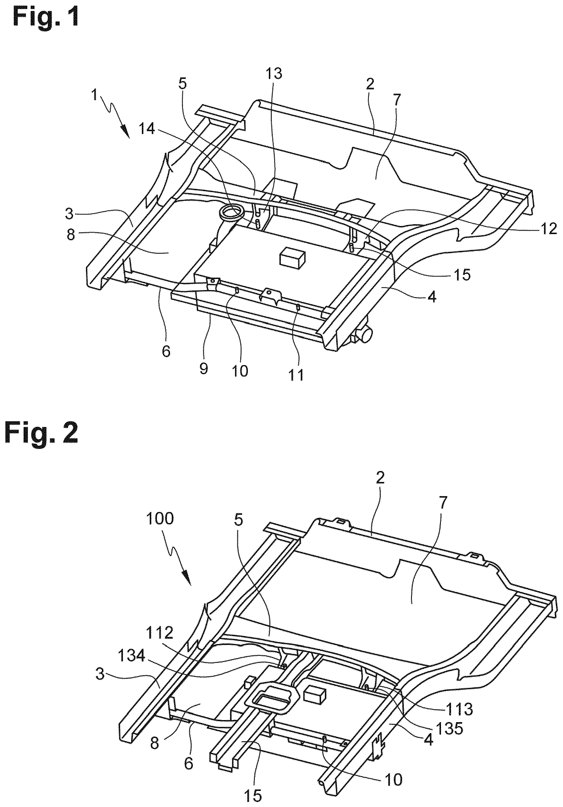

En se référant à la figure 1, certains véhicules automobiles possèdent un plancher divisé en deux parties :
- un plancher avant sur lequel va notamment reposer une rangée avant de sièges, comprenant un siège conducteur et un siège passager,
- un plancher arrière 1 sur lequel va reposer une rangée arrière de sièges de rang 2 et une rangée arrière de sièges de rang 3, la rangée de rang 3 étant située juste derrière la rangée de rang 2 et ladite rangée de rang 2 étant placée juste derrière la rangée avant de sièges.

Le plancher avant et le plancher arrière 1 sont dans la continuité l'un de l'autre et sont séparés par une pareclose 2 qui est un élément s'étendant selon un axe horizontal et transversal Y du véhicule. Cet élément est assimilable à une barre transversale s'inscrivant dans un plan transversal et vertical YZ du véhicule.

Le plancher arrière 1 est délimité par deux longerons 3, 4 allongés et parallèles, s'étendant chacun suivant un axe horizontal et longitudinal X du véhicule. Ces deux longerons 3, 4 sont écartés en étant situés sur deux bords latéraux du véhicule. Ce plancher arrière 1 comporte également :
- une traverse centrale arrière 5 s'étendant selon un axe horizontal et transversal Y du véhicule, en étant positionnée derrière la pareclose 2 et joignant les deux longerons 3, 4, et
- une traverse de portage 6 de la batterie s'étendant selon un axe horizontal et transversal Y du véhicule, en étant positionnée derrière la traverse centrale arrière 5 et joignant les deux longerons 3, 4. Cette traverse de portage 6 est assimilable à un tube creux dont le profil est adapté aux différentes pièces constituant l'environnement immédiat de ladite traverse de portage 6.

Un premier espace 7 délimité par la pareclose 2, la traverse centrale arrière 5 et les deux longerons 3, 4 correspond à une partie avant dudit plancher arrière, et est destiné à recevoir la rangée arrière de sièges de rang 2. Un deuxième espace 8 délimité par la traverse centrale arrière 5, la traverse de portage de batterie 6 et les deux longerons 3, 4 correspond à une partie arrière du plancher arrière et est destiné à recevoir la rangée arrière de sièges de rang 3 et une batterie électrique 9 haute tension HEV ou E-tech. La rangée arrière de sièges de rang 3 est placée sur la partie arrière du plancher arrière, tandis que la batterie électrique 9 haute tension est fixée sous ladite partie du plancher arrière 1.

Actuellement, la batterie électrique 9 est fixée :
- à la traverse de portage de batterie 6 au moyen de deux vis 10, 11, et
- à deux pontets 12, 13 de la traverse centrale arrière 5, au moyen de deux vis 14, 15.

Ces deux pontets 12, 13 sont assimilables à deux pattes de fixation ordinaires destinées simplement à arrimer la batterie 9 électrique haute tension sous le véhicule, sans posséder de propriété particulière de résistance mécanique et de raideur. Il en résulte que la traverse centrale arrière 5 doit être renforcée mécaniquement pour maintenir la batterie, en créant des reliefs spécifiques sur celle-ci et en ajoutant des éléments de renfort à celle-ci. Or, le renforcement de cette traverse centrale arrière 5 nécessite un temps de fabrication plus long, et donc des coûts supplémentaires liés à ce temps de fabrication rallongé et à l'ajout d'éléments de renfort.

Un véhicule selon l'invention possède un système de fixation de la batterie permettant de s'affranchir des inconvénients rencontrés dans l'état de la technique.

L'invention a pour objet un véhicule comprenant une batterie électrique haute tension et un plancher arrière comprenant deux longerons parallèles s'étendant selon un axe longitudinal X du véhicule, une traverse centrale arrière et une traverse de portage de batterie, lesdites deux traverses s'étendant suivant un axe transversal Y du véhicule et joignant lesdits deux longerons, la traverse centrale arrière étant placée devant la traverse de portage, la batterie électrique étant fixée à la traverse de portage et à deux pontets solidarisés à la traverse centrale arrière.

Selon l'invention, la traverse centrale arrière présente une zone renflée s'étendant le long de ladite traverse, chaque pontet présentant une première zone de fixation sous la forme d'une patte profilée enserrant ladite zone renflée en établissant avec ladite zone renflée un contact surfacique étendu. En établissant un contact surfacique étendu avec la traverse centrale arrière, chaque pontet constitue une extension de ladite traverse centrale arrière, conférant à l'ensemble composé de ladite traverse centrale arrière et des deux pontets une certaine robustesse. Les pontets sont conçus de telle manière qu'ils ne présentent aucune zone de faiblesse structurelle, par exemple sous la forme d'un tronçon effilé, susceptible de mener à une pliure ou à une rupture dudit pontet. De cette manière, il n'est plus nécessaire de renforcer la structure de la traverse centrale arrière pour supporter la batterie électrique haute tension, puisque les pontets participent directement à la rigidification de cette traverse centrale arrière. Préférentiellement, la traverse centrale arrière et les deux pontets sont en métal. Préférentiellement, la zone renflée de la traverse centrale arrière se présente sous la forme d'une bosse (par rapport à une traverse rigoureusement plane) s'étendant le long de la traverse centrale arrière et permettant de rigidifier un peu plus ladite traverse. Cette zone renflée s'étend au moins partiellement le long de la traverse centrale arrière, et préférentiellement s'étend sur la totalité de la traverse.

Selon une caractéristique possible de l'invention, la traverse centrale arrière est placée sous le véhicule et à l'extérieur de celui-ci, les deux pontets étant solidarisés à ladite traverse centrale en étant situés en-dessous de celle-ci. De cette manière, les deux pontets sont « suspendus » à la traverse centrale arrière, et la batterie électrique haute tension est « suspendue » auxdits deux pontets.

Selon une caractéristique possible de l'invention, la patte profilée de la première zone de fixation de chaque pontet possède une forme qui épouse étroitement la forme de la zone renflée de la traverse centrale arrière sans laisser subsister de jeu avec celle-ci. Ainsi, il existe donc un contact étroit entre chaque pontet et la traverse centrale arrière, renforçant ainsi la cohésion et la résistance mécanique de l'ensemble constitué par la traverse centrale arrière et les deux pontets. De plus, l'absence de jeu élimine toutes les possibilités de mouvement relatif entre chaque pontet et la traverse centrale arrière.

Selon une caractéristique possible de l'invention, la zone renflée est délimitée par trois parois, la patte profilée de la première zone de fixation de chaque pontet possédant trois parois venant au contact des trois parois de ladite zone renflée. Cette configuration illustre un exemple de contact optimisé entre chaque pontet et la traverse centrale arrière. Pour cette configuration, chaque paroi du pontet vient en contact avec une paroi de la traverse centrale arrière

Selon une caractéristique possible de l'invention, l'une des trois parois de la première zone de fixation de chaque pontet est constituée de deux sous-parois ayant la même inclinaison. Avantageusement, chaque sous-paroi est de faible largeur et peut ainsi être assimilée à un pied étroit.

Selon une caractéristique possible de l'invention, chaque pontet possède une deuxième zone de fixation sous la forme d'une bosse possédant un orifice, la batterie électrique haute tension étant arrimée à la deuxième zone de fixation de chaque pontet au moyen d'une vis passant par l'orifice. De cette manière, chaque pontet possède une zone de fixation lui permettant d'être arrimé à la traverse centrale arrière et une zone de fixation permettant une fixation de la batterie électrique. Préférentiellement, la bosse est creuse.

Selon une caractéristique possible de l'invention, la deuxième zone de fixation est placée au-dessous de la première zone de fixation de chaque pontet, la batterie électrique étant placée sous les deuxièmes zones de fixation des deux pontets.

Selon une caractéristique possible de l'invention, les pontets sont solidarisés à la traverse centrale arrière par soudure.

Selon une caractéristique possible de l'invention, la batterie électrique est fixée à la traverse de portage au moyen de deux vis.

Selon une caractéristique possible de l'invention, la traverse de portage a la forme d'un tube creux.

Un véhicule selon l'invention présente l'avantage de posséder un système de fixation robuste d'une batterie électrique haute tension, au moyen de deux pontets ayant une géométrie simple mais judicieuse, empêchant d'avoir à renforcer la traverse centrale arrière. Ce système de fixation a l'avantage d'être performant, tout en étant léger et peu encombrant.

On donne ci-après une description détaillée d'un mode de réalisation préféré d'un véhicule selon l'invention, en se référant aux figures suivantes :
[Fig. 1] représente une vue en perspective du dessus d"une partie d'un plancher arrière d'un véhicule selon l'état de la technique,
[Fig. 2] représente une vue en perspective du dessus d"une partie d'un plancher arrière d'un véhicule selon l'invention,
[Fig. 3] représente une vue en perspective du dessous d'un plancher arrière d'un véhicule selon l'invention,
[Fig. 4] représente une vue du dessous d'une partie d'un plancher arrière d'un véhicule selon l'invention,
[Fig. 5] représente une vue en perspective du dessus d'une traverse centrale arrière dotée de deux pontets, d'un véhicule selon l'invention,
[Fig. 6] représente une vue en perspective du dessous de la traverse de I figure 5,
[Fig. 7] représente une vue en perspective du dessous d'un pontet d'un véhicule selon l'invention,
[Fig. 8] représente une vue en perspective du dessus du pontet de la figure 7,

Un véhicule selon l'invention se distingue d'un véhicule selon l'état de la technique dont une partie du plancher arrière a été décrite précédemment en se référant à la figure 1, essentiellement sur la géométrie des pontets 12, 13. Toutes les autres pièces, à savoir les deux longerons 3, 4, la pareclose 2, la traverse centrale arrière 5, la traverse de portage 6 de la batterie 9 électrique haute tension ainsi que ladite batterie électrique 9 demeurent inchangées.

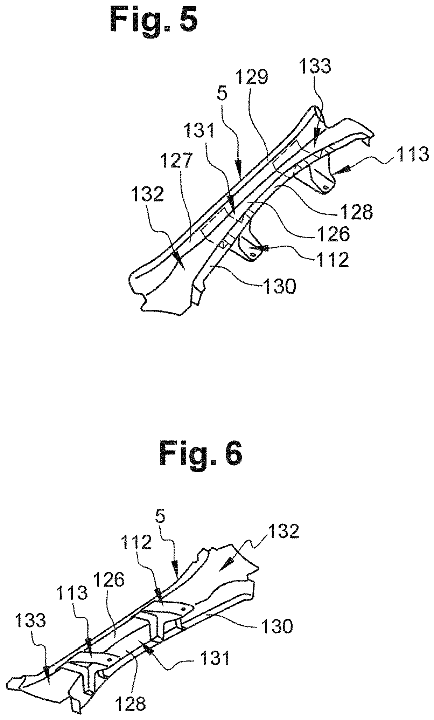

En se référant aux figures 5 et 6, dans un véhicule selon l'invention, deux pontets 112, 113 sont soudés à la traverse centrale arrière 5. Chaque pontet 112, 113 constitue une pièce relais permettant d'assurer la fixation de la batterie électrique 9 au plancher arrière 1 du véhicule, et plus précisément à la traverse centrale arrière 5 dudit plancher arrière 1.

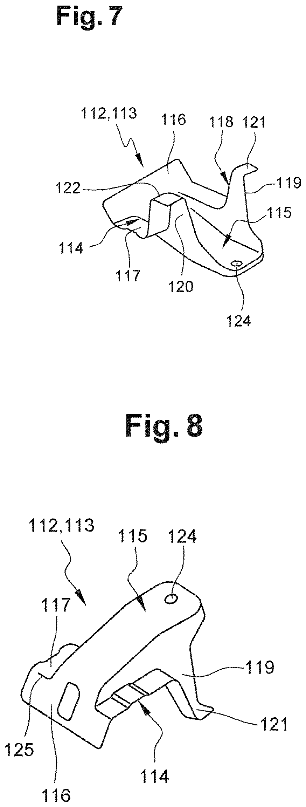

En se référant aux figures 7 et 8, chaque pontet 112, 113 comprend une première zone de fixation 114 lui permettant de s'accrocher à la traverse centrale arrière 5, et une deuxième zone de fixation 115 par laquelle la batterie électrique 9 haute tension va venir se fixer sous le plancher arrière 1 du véhicule. La première zone de fixation 114 comprend schématiquement trois parois 116, 117, 118 sensiblement planes, dont deux parois latérales 116, 118 et une paroi de liaison 117 reliant lesdites deux parois latérales 116, 118. Ces trois parois 116, 117, 118 sont continues et les deux parois latérales 116, 118 sont inclinées par rapport à la paroi de liaison 117 de sorte que lesdites trois parois 116, 117, 118 forment un pont délimitant un espace bien identifié. L'une 118 des deux parois latérales 116, 118 est constituée de deux sous-parois 119, 120 séparées et ayant la même inclinaison. Ces deux sous-parois 119, 120 ont des largeurs faibles si bien qu'elles peuvent être assimilées à des pieds étroits. Elles se terminent chacune par un segment replié121, 122.

En se référant aux figures 7 et 8, la deuxième zone de fixation 115 se présente sous la forme d'une bosse creuse dotée d'un orifice traversant 124. Cette bosse 115 prend naissance au niveau d'une ligne de jonction 125 entre une face latérale 116 et la face de liaison117, et s'étend au-delà de l'autre face latérale 118 constituée des deux sous-parois 119, 120. Cette deuxième zone de fixation 115 constitue un renflement venant créer une surépaisseur sur la première zone de fixation 114.

En se référant aux figures 5 et 6, la traverse centrale arrière 5 est une pièce allongée et creuse, possédant un fond 126 bordé par deux parois latérales 127, 128 se terminant chacune par un bord replié 129, 130. Schématiquement, cette traverse centrale 5 arrière présente une zone centrale 131 de faible épaisseur qui est prolongée à chacun de ses côtés par deux segments 132, 133 divergents. Par rapport à une pièce rigoureusement plate, cette traverse centrale arrière 5 se présente sous la forme d'une pièce renflée.

En se référant aux figures 5 et 6, chacun des deux pontets 112, 113 est soudé à la traverse centrale arrière 5 de sorte que :
- les trois parois 116, 117, 118 de la première zone de fixation 114 enserrent le fond 126 et les deux parois latérales 127, 128 bordant ledit fond 126 de la traverse centrale arrière 5,
- les trois parois 116, 117, 118 de ladite première zone de fixation 114 établissent un contact surfacique avec le fond 126 et les deux parois latérales 127, 128 bordant ledit fond 126,
- les segments repliés 121, 122 terminant les deux sous-parois 119, 119 constituant l'une 118 des parois latérales 116, 118 de la première zone de fixation 114 du pontet 112, 113, sont au contact des deux bords repliés 129, 130 des deux parois latérales 127, 128 bordant le fond 126 de la traverse centrale arrière 5,
- la bosse composant la deuxième zone de fixation 115 saille du fond 126 de la traverse centrale arrière 5, en créant une surépaisseur. Schématiquement, la première zone de fixation 114 et la deuxième zone de fixation 115 se superposent.

En se référant aux figures 5 et 6, la première zone de fixation 114 de chaque pontet 112, 113, épouse étroitement la forme de la traverse centrale arrière 5, en établissant un contact étendu avec ladite traverse centrale arrière 5 et sans laisser subsister de jeu avec celle-ci.

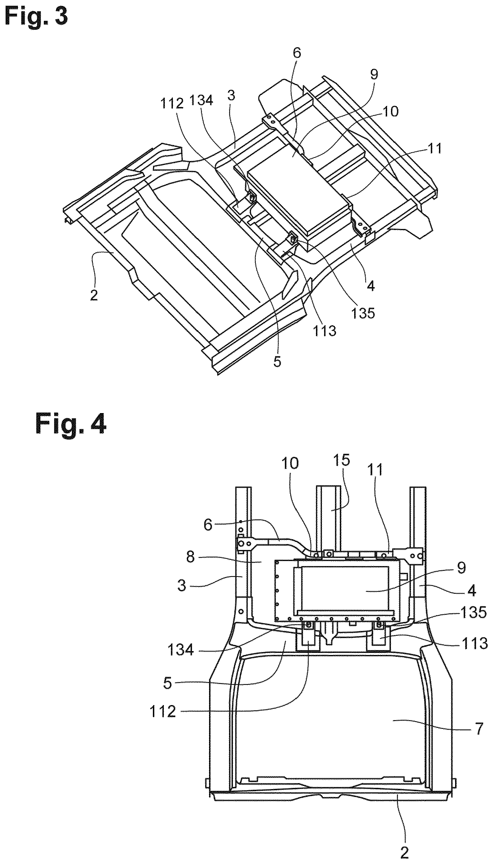

En se référant aux figures 2, 3 et 4, la traverse centrale arrière 5 est fixée aux deux longerons 3, 4 de sorte que le fond 126 constitue sa partie la plus basse. Chaque pontet 112, 113 est soudée à la traverse centrale arrière 5 en respectant les règles suivantes :
- la première zone de fixation 114 se retrouve sous le fond 126 de la traverse centrale arrière 5,
- la deuxième zone de fixation 115 se retrouve sous ladite première zone de fixation 114, de manière que la bosse constituant ladite deuxième zone de fixation 114 s'étendent vers le bas,
- la bosse constituant la deuxième zone de fixation 114 s'étende également vers la batterie électrique 9, de manière que l'orifice 124 soit situé dans une zone de ladite bosse qui soit la plus proche de ladite électrique 9.

La batterie électrique 9 est ainsi fixée à la traverse de portage 6 au moyen de deux vis 10, 11, et est fixée à la traverse centrale arrière 5 au moyen de deux vis 134,135, passant par les orifices 124 des deux bosses constituant les deuxièmes zones de fixation 115 des pontets 112, 113 soudés à la traverse centrale arrière 5, lesdites deux vis 134, 135 s'étendant chacune suivant un axe vertical.

Grâce à la géométrie spécifique des deux pontets 112, 113 qui viennent épouser la forme de la traverse centrale arrière 5 en enserrant étroitement celle-ci, la fixation de la batterie électrique 9 haute tension à la traverse centrale arrière 5 présente une bonne robustesse. Il n'est donc plus nécessaire de renforcer la traverse centrale arrière 5. De plus, chacun desdits pontets 112, 113 ne présente aucune zone de faiblesse structurelle susceptible de conduire à une torsion progressive dans le temps dudit pontet 112, 113 ou de conduire à une rupture de celui-ci.

Pour bien préciser les choses, la batterie électrique 9 haute tension est fixée sous la caisse du véhicule et donc à l'extérieur de celui-ci.

## Revendications

1. Véhicule comprenant une batterie électrique (9) haute tension et un plancher arrière (1, 100) comprenant deux longerons (3, 4) parallèles s'étendant selon un axe longitudinal X du véhicule, une traverse centrale arrière (5) et une traverse de portage (6) de batterie, lesdites deux traverses (5, 6) s'étendant suivant un axe transversal Y du véhicule et joignant lesdits deux longerons (3, 4), la traverse centrale arrière (5) étant placée devant la traverse de portage (6), la batterie électrique (9) étant fixée à la traverse de portage (6) et à deux pontets (12, 13, 112, 113) solidarisés à la traverse centrale arrière (5), **caractérisé en ce que** la traverse centrale arrière (5) présente une zone renflée s'étendant le long de ladite traverse (5), et **en ce que** chaque pontet (112, 113) présente une première zone de fixation (114) sous la forme d'une patte profilée enserrant ladite zone renflée en établissant avec ladite zone renflée un contact surfacique étendu.

2. Véhicule selon la revendication 1, **caractérisé en ce que** la traverse centrale arrière (5) est placée sous le véhicule à l'extérieur de celui-ci, et **en ce que** les deux pontets (112, 113) sont solidarisés à ladite traverse centrale arrière (5) en étant situés en-dessous de celle-ci.

3. Véhicule selon la revendication 2, **caractérisé en ce que** la patte profilée de la première zone de fixation (114) de chaque pontet (112, 113) possède une forme qui épouse étroitement la forme de la zone renflée sans laisser subsister de jeu avec celle-ci.

4. Véhicule selon l'une quelconque des revendications 2 ou 3, **caractérisé en ce que** la zone renflée est délimitée par trois parois (126, 127, 128), et **en ce que** la patte profilée de la première zone de fixation (114) de chaque pontet (112, 113) possède trois parois (116, 117, 118) venant au contact des trois parois (126, 127, 128) de ladite zone renflée.

5. Véhicule selon la revendication 4, **caractérisé en ce que** l'une (118) des trois parois est constituée de deux sous-parois (119, 120) séparées ayant la même inclinaison.

6. Véhicule selon l'une quelconque des revendications 2 à 5, **caractérisé en ce que** chaque pontet (112, 113) possède une deuxième zone de fixation (115) sous la forme d'une bosse possédant un orifice (124), et **en ce que** la batterie électrique (9) haute tension est arrimée à la deuxième zone de fixation (115) de chaque pontet (112, 113) au moyen d'une vis (134, 135) passant par l'orifice (124).

7. Véhicule selon la revendication 6, **caractérisé en ce que** la deuxième zone (115) de fixation est placée au-dessous de la première zone (114) de fixation de chaque pontet (112, 113), et **en ce que** la batterie électrique (9) est placée sous les deuxièmes zones (115) de fixation des deux pontets (112, 113).

8. Véhicule selon l'une quelconque des revendications 1 à 7, **caractérisé en ce que** les pontets (112, 113) sont solidarisés à la traverse centrale arrière (5) par soudure.

9. Véhicule selon l'une quelconque des revendications 1 à 8, **caractérisé en ce que** la batterie électrique (9) est fixée à la traverse de portage (6) au moyen de deux vis (10, 11).

10. Véhicule selon l'une quelconque des revendications 1 à 9, **caractérisé en ce que** la traverse de portage (5) a la forme d'un tube creux.

## Patentansprüche

1. Fahrzeug, umfassend eine elektrische Hochvoltbatterie (9) und einen hinteren Boden (1, 100), der zwei parallele Längsträger (3, 4), die sich entlang einer Längsachse X des Fahrzeugs erstrecken, einen hinteren zentralen Querträger (5) und einen Batterietragequerträger (6) umfasst, wobei sich die beiden Querträger (5, 6) entlang einer Querachse Y des Fahrzeugs erstrecken und die beiden Längsträger (3, 4) verbinden, wobei der hintere zentrale Querträger (5) vor dem Tragequerträger (6) platziert ist, wobei die elektrische Batterie (9) an dem Tragequerträger (6) und an zwei Stegen (12, 13, 112, 113) befestigt ist, die fest mit dem hinteren zentralen Querträger (5) verbunden sind, **dadurch gekennzeichnet, dass** der hintere zentrale Querträger (5) eine bauchige Zone aufweist, die sich entlang des Querträgers (5) erstreckt, und **dass** jeder Steg (112, 113) eine erste Befestigungszone (114) in Form einer profilierten Lasche aufweist, die die bauchige Zone umschließt, indem sie mit der bauchigen Zone einen erweiterten Oberflächenkontakt herstellt.

2. Fahrzeug nach Anspruch 1, **dadurch gekennzeichnet, dass** der hintere zentrale Querträger (5) unter dem Fahrzeug außerhalb desselben platziert ist, und **dass** die beiden Stege (112, 113) an dem hinteren zentralen Querträger (5) fest verbunden sind, indem sie sich unterhalb desselben befinden.

3. Fahrzeug nach Anspruch 2, **dadurch gekennzeichnet, dass** die profilierte Lasche der ersten Befestigungszone (114) jedes Stegs (112, 113) eine Form besitzt, die der Form der bauchigen Zone weitgehend entspricht, ohne ein Spiel mit derselben fortbestehen zu lassen.

4. Fahrzeug nach einem der Ansprüche 2 oder 3,
**dadurch gekennzeichnet, dass** die bauchige Zone durch drei Wände (126, 127, 128) begrenzt ist, und **dass** die profilierte Lasche der ersten Befestigungszone (114) jedes Stegs (112, 113) drei Wände (116, 117, 118) besitzt, die mit den drei Wänden (126, 127, 128) der bauchigen Zone in Kontakt kommen.

5. Fahrzeug nach Anspruch 4, **dadurch gekennzeichnet, dass** eine (118) der drei Wände aus zwei getrennten Unterwänden (119, 120) mit gleicher Neigung besteht.

6. Fahrzeug nach einem der Ansprüche 2 bis 5,
**dadurch gekennzeichnet, dass** jeder Steg (112, 113) eine zweite Befestigungszone (115) in Form eines Höckers besitzt, der eine Öffnung (124) besitzt, und **dass** die elektrische Hochvoltbatterie (9) an der zweiten Befestigungszone (115) jedes Stegs (112, 113) mittels einer Schraube (134, 135), die durch die Öffnung (124) verläuft, angedockt ist.

7. Fahrzeug nach Anspruch 6, **dadurch gekennzeichnet, dass** die zweite Befestigungszone (115) unterhalb der ersten Befestigungszone (114) jedes Stegs (112, 113) platziert ist, und **dass** die elektrische Batterie (9) unter den zweiten Befestigungszonen (115) der beiden Stege (112, 113) platziert ist.

8. Fahrzeug nach einem der Ansprüche 1 bis 7,
**dadurch gekennzeichnet, dass** die Stege (112, 113) an dem hinteren zentralen Querträger (5) durch Schweißen fest verbunden sind.

9. Fahrzeug nach einem der Ansprüche 1 bis 8,
**dadurch gekennzeichnet, dass** die elektrische Batterie (9) mittels zweier Schrauben (10, 11) an dem Tragequerträger (6) befestigt ist.

10. Fahrzeug nach einem der Ansprüche 1 bis 9,
**dadurch gekennzeichnet, dass** der Trage2querträger (5) die Form eines Hohlrohrs aufweist.

## Claims

1. A vehicle comprising a high-voltage electric battery (9) and a rear floor (1, 100) comprising two parallel side members (3, 4) extending along a longitudinal axis X of the vehicle, a rear central cross-member (5) and a battery-carrying cross-member (6), said two cross-members (5, 6) extending along a transverse axis Y of the vehicle and joining said two side members (3, 4), the rear central cross-member (5) being placed in front of the carrying cross-member (6), the electric battery (9) being fixed to the carrying cross-member (6) and to two bridges (12, 13, 112, 113) secured to the rear central cross-member (5), **characterized in that** the rear central cross-member (5) has a bulged zone extending along said cross-member (5), and **in that** each bridge (112, 113) has a first attachment zone (114) in the form of a profiled lug gripping said bulged zone, establishing with said bulged zone an extended surface contact.

2. The vehicle according to claim 1, **characterized in that** the rear central cross-member (5) is located underneath the vehicle on the outside thereof, and **in that** the two bridges (112, 113) are secured to said rear central cross-member (5) by being located underneath same.

3. The vehicle according to claim 2, **characterized in that** the profiled lug of the first attachment zone (114) of each bridge (112, 113) is shaped to closely match the shape of the bulged zone without leaving any clearance therewith.

4. The vehicle according to any one of claims 2 or 3, **characterized in that** the bulged zone is delimited by three walls (126, 127, 128), and **in that** the profiled lug of the first attachment zone (114) of each bridge (112, 113) has three walls (116, 117, 118) coming into contact with the three walls (126, 127, 128) of said bulged zone.

5. The vehicle according to claim 4, **characterized in that** one (118) of the three walls consists of two separate sub-walls (119, 120) having the same inclination.

6. The vehicle according to any one of claims 2 to 5, **characterized in that** each bridge (112, 113) has a second attachment zone (115) in the form of a boss having an opening (124), and **in that** the high-voltage electric battery (9) is secured to the second attachment zone (115) of each bridge (112, 113) by means of a screw (134, 135) passing through the opening (124).

7. The vehicle according to claim 6, **characterized in that** the second attachment zone (115) is located below the first attachment zone (114) of each bridge (112, 113), and **in that** the electric battery (9) is located below the second attachment zones (115) of both bridges (112, 113).

8. The vehicle according to any one of claims 1 to 7, **characterized in that** the bridges (112, 113) are secured to the rear central cross-member (5) by welding.

9. The vehicle according to any one of claims 1 to 8, **characterized in that** the electric battery (9) is fixed to the carrying cross-member (6) by means of two screws (10, 11).

10. The vehicle according to any one of claims 1 to 9, **characterized in that** the carrying cross-member (5) is in the form of a hollow tube.
